(19) Europäisches Patentamt
European Patent Office
Office européen des brevets

(11) Veröffentlichungsnummer : **0 204 949**
**B1**

(12) # EUROPÄISCHE PATENTSCHRIFT

(45) Veröffentlichungstag der Patentschrift : **17.08.88**

(51) Int. Cl.[4] : **C 07 F 9/24**, A 01 N 57/28

(21) Anmeldenummer : **86106108.3**

(22) Anmeldetag : **05.05.86**

(54) **Phosphoroimidate.**

(30) Priorität : **14.05.85 JP 100607/85**

(43) Veröffentlichungstag der Anmeldung : **17.12.86 Patentblatt 86/51**

(45) Bekanntmachung des Hinweises auf die Patenterteilung : **17.08.88 Patentblatt 88/33**

(84) Benannte Vertragsstaaten : **AT BE CH DE FR GB IT LI NL**

(56) Entgegenhaltungen : **DE-A- 2 260 576**

(73) Patentinhaber : **NIHON TOKUSHU NOYAKU SEIZO K.K.**
**No.4, 2-chome, Nihonbashi Honcho Chuo-ku**
**Tokyo 103 (JP)**

(72) Erfinder : **Kume, Toyohiko**
**6-7-8, Asahigaoka**
**Hino-shi Tokyo (JP)**
Erfinder : **Tsuboi, Shinichi**
**3-26-1-3-101, Hirayama**
**Hino-shi Tokyo (JP)**
Erfinder : **Isono, Kunihiro**
**2-32-4, Asahigaoka**
**Hino-shi Tokyo (JP)**

(74) Vertreter : **Schumacher, Günter, Dr. et al**
**c/o Bayer AG Konzernverwaltung RP Patentabteilung**
**D-5090 Leverkusen 1 Bayerwerk (DE)**

**EP 0 204 949 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Phosphoroimidate, ein Verfahren zu ihrer Herstellung und ihre Verwendung als Insektizide, Akarizide und Nematizide.

Es wurde bereits offenbart, daß bestimmte Phosphoroimidate insektizide und akarizide Aktivität besitzen (siehe die JP-OS 67 437/1973 oder die DE-A-22 60 576).

Nunmehr wurden neue Phosphoroimidate der Formel (I)

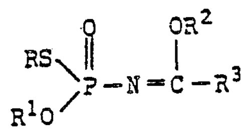

(I)

gefunden, in der

R n-Propyl oder sec-Butyl (vorzugsweise n-Propyl) bezeichnet,

$R^1$ Methyl oder Ethyl (vorzugsweise Ethyl) bezeichnet,

$R^2$ Methyl oder Ethyl (vorzugsweise Ethyl) bezeichnet

und

$R^3$ Alkyl mit 3 bis 4 Kohlenstoff-Atomen (vorzugsweise n- oder i-Propyl oder n-Butyl) bezeichnet.

Die Verbindungen der Formel (I) werden erhalten, wenn

(a) die Verbindungen der Formel (II)

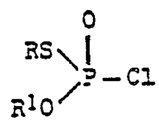

(II)

in der R und $R^1$ die im Vorstehenden angegebenen Bedeutungen haben, mit Verbindungen der Formel (III)

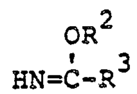

(III)

in der $R^2$ und $R^3$ die im Vorstehenden angegebenen Bedeutungen haben, in Gegenwart inerter Lösungsmittel, gegebenenfalls in Gegenwart von Säure-Acceptoren, umgesetzt werden, oder

(b) die Verbindungen der Formel (IV)

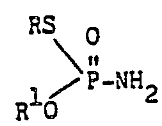

(IV)

in der R und $R^1$ die im Vorstehenden angegebenen Bedeutungen haben, mit Verbindungen der Formel (V)

$$R^3—C(OR^2)_3 \qquad (V),$$

in der $R^2$ und $R^3$ die im Vorstehenden angegebenen Bedeutungen haben, in Gegenwart inerter Lösungsmittel umgesetzt werden.

Die neuen Phosphoroimidate zeigen potente insektizide, akarizide und nematizide Eigenschaften.

Überraschenderweise zeigen die neuen Phosphoroimidate gemäß der vorliegenden Erfindung eine wesentlich größere insektizide, akarizide und nematizide Wirksamkeit als diejenigen, die aus dem oben genannten Stand der Technik bekannt sind.

In den allgemeinen Formeln bezeichnet $R^3$ geradkettiges oder verzweigtes Propyl oder Butyl, d.h. n- und i-Propyl oder n-, i-, sec- und tert-Butyl, vorzugsweise n- und i-Propyl oder n-$C_4H_9$, und besonders bevorzugt n- und i-Propyl.

Unter den Phosphoroimidaten der Formel (I) gemäß der vorliegenden Erfindung sind bevorzugte Verbindungen diejenigen, in denen

R n-Propyl oder sec-Butyl bezeichnet,

$R^1$ Ethyl bezeichnet,

$R^2$ Ethyl bezeichnet und

$R^3$ n- oder i-Propyl oder n-, i- oder sec-Butyl bezeichnet.

Besonders bevorzugte Phosphoroimidate der Formel (I) sind diejenigen, in denen
R n-Propyl bezeichnet,
$R^1$ Ethyl bezeichnet,
$R^2$ Ethyl bezeichnet und
$R^3$ n- oder i-Propyl bezeichnet.
Speziell erwähnt seien die folgenden Verbindungen :
Ethyl-N-(O-ethyl-S-n-propylthiophosphoryl)isobutyroimidat,
Ethyl-N-(O-ethyl-S-n-propylthiophosphoryl)butyroimidat.

Wenn beispielsweise in dem Verfahren (a) O-Ethyl-S-n-propylphosphorochloridothioat und Ethylisobutyroimidat als Ausgangsstoffe eingesetzt werden, kann der Reaktionsverlauf durch die folgende Gleichung dargestellt werden :

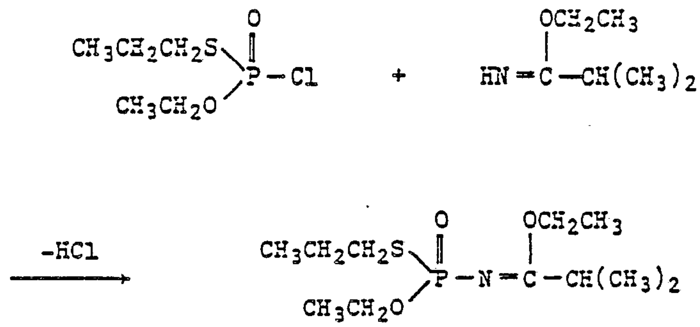


Wenn beispielsweise in dem Verfahren (b) O-Ethyl-S-n-propylphosphorothioamidat und 1,1,1-Triethoxybutan als Ausgangsstoffe eingesetzt werden, kann der Reaktionsverlauf durch die folgende Gleichung dargestellt werden :

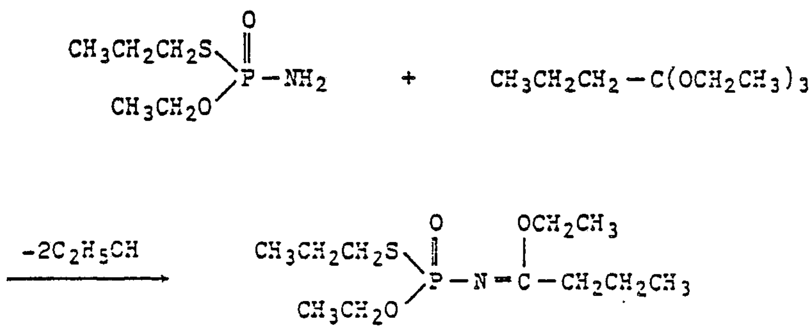


Die erfindungsgemäß einsetzbaren Verbindungen der Formel (II) sind auf dem Gebiet der phosphororganischen Chemie bereits bekannt. Als Beispiele seien erwähnt :
O-Ethyl-S-n-propylphosphorochloridothioat und
O-Ethyl-S-sec-butylphosphorochloridothioat.

Die erfindungsgemäß einsetzbaren Verbindungen der Formel (III) sind ebenfalls zum größten Teil auf dem Gebiet der organischen Chemie bereits bekannt. Als Beispiele seien erwähnt :
Ethyl-isobutyroimidat,
Ethyl-butyroimidat,
Ethyl-valeroimidat,
Ethyl-isovaleroimidat und
Ethyl-pivaloimidat.

Die Verbindungen der Formel (III) lassen sich leicht synthetisieren, beispielsweise mittels des in Bull. Soc. Chim. France 1964, Nr. 11, Seiten 2997-2999, beschriebenen Verfahrens.

Geeignete Verdünnungsmittel bei dem Verfahren (a) sind sämtliche inerten Lösungsmittel. Diese umfassen vorzugsweise aliphatische, cycloaliphatische und aromatische Kohlenwasserstoffe (die gegebenenfalls chloriert sein können), zum Beispiel Hexan, Cyclohexan, Petrolether, Ligroin, Benzol, Toluol, Xylol, Methylenchlorid, Chloroform, Kohlenstofftetrachlorid, Ethylenchlorid, Trichloroethylen und Chlorbenzol ; Ether, zum Beispiel Diethylether, Methylethylether, Diisopropylether, Dibutylether, Dioxan und Tetrahydrofuran ; Ketone, zum Beispiel Aceton, Methylethylketon, Methylisopropylketon und Methylisobutylketon ; Nitrile, zum Beispiel Acetonitril, Propionitril und Acrylnitril ; Ester, zum Beispiel Ethylacetat und Amylacetat ; Säureamide, zum Beispiel Dimethylformamid und Dimethylacetamid ; Sulfone und Sulfoxide, zum Beispiel Dimethylsulfoxid und Sulfolan ; und Basen wie Pyridin.

Weiterhin kann das obige Verfahren (a) in Gegenwart von Säure-Acceptoren durchgeführt werden.

Die säurebindenden Mittel können die Hydroxide, Carbonate oder Hydrogencarbonate von Kalium oder Natrium, die gewöhnlich eingesetzt werden, sowie tertiäre Amine, beispielsweise Triethylamin, Diethylanilin und Pyridin, umfassen.

Die Reaktionstemperatur kann innerhalb eines beträchtlichen Bereichs variiert werden. Im allgemeinen wird die Reaktion zwischen etwa — 20 °C und etwa 100 °C, vorzugsweise zwischen etwa 0 °C und etwa 60 °C, durchgeführt.

Die Reaktion kann unter normalen Druck, jedoch auch unter erhöhtem Druck durchgeführt werden. Im allgemeinen wird sie unter Umgebungsdruck durchgeführt.

Bei der Durchführung des Verfahrens (a) können die Verbindungen der Formel (I) in der Weise synthetisiert werden, daß man die Verbindungen der allgemeinen Formel (III) in einer Menge von etwa 1 bis 3 mol, vorzugsweise etwa 1,5 bis 2,5 mol, auf 1 mol der Verbindung der Formel (II) in Anwesenheit inerter Lösungsmittel zur Reaktion einsetzt.

In dem obigen Verfahren (b) sind die Ausgangsstoffe der Formeln (IV) und (V) Verbindungen, die auf dem Gebiet der organischen Chemie bereits wohlbekannt sind oder sich nach bekannten Methoden herstellen lassen.

Das Verfahren (b) kann nach bekannten Methoden durchgeführt werden (siehe zum Beispiel die JP-OS 67 437/1973 oder die DE-A-22 60 576).

Vorzugsweise werden die Verbindungen der Formel (IV) mit den Verbindungen der Formel (V) in Gegenwart einer Lösung von Hydrogenchlorid in einem Alkohol (wie Methanol, Ethanol oder Propanol) und gegebenenfalls in Gegenwart inerter organischer Lösungsmittel, wie sie im Vorstehenden für das Verfahren (a) genannt wurden, vorzugsweise in Gegenwart von Acetonitril, zur Reaktion gebracht.

Die Reaktion wird im allgemeinen bei Temperaturen zwischen 10 °C und 120 °C, vorzugsweise zwischen etwa 60 °C und 100 °C, unter normalen Druck oder unter erhöhtem Druck durchgeführt.

Bei der Durchführung des Verfahrens (b) wird 1 mol der Verbindungen der Formel (IV) mit 0,8 bis 2,5 mol, vorzugsweise 1,0 bis 1,5 mol, der Verbindungen der Formel (V) umgesetzt. Die Endprodukte der Formel (I) werden nach bekannten Arbeitsweisen isoliert, z. B. durch Destillieren der Lösungsmittel unter Vakuum.

Die aktiven Substanzen gemäß der vorliegenden Erfindung zeigen potente insektizide, akarizide und nematizide Wirkung, insbesondere gegen Boden-Insekten. Aus diesem Grunde können sie zur Bekämpfung verschiedenartiger Schadinsekten eingesetzt werden.

Die aktiven Substanzen besitzen auch systemische Wirkung.

Beispiele für solche schädlichen Insekten können die folgenden umfassen :

Insekten der Ordnung Coleoptera, z. B.

Callosobruchus chinensis,
Sitophilus zeamais,
Tribolium castaneum,
Epilachna vigintioctomaculata,
Agriotes fuscicollis,
Anomala rufocuprea,
Leptinotarsa decemlineata,
Diabrotica spp.,
Monochamus alternatus,
Lissorhoptus oryzophilus und
Lyctus brunneus ;

Insekten der Ordnung Lepidoptera, z. B.

Lymantria dispar,
Malacosoma neustria,
Pieris rapae,
Spodoptera litura,
Mamestra brassicae,
Chilo suppressalis
Pyrausta nubilalis,
Ephestia cautella,
Adoxophyes orana,
Carpocapsa pomonella,
Agrotis fucosa,
Galleria mellonella,
Plutella maculipennis und
Phyllocnistis citrella ;

Insekten der Ordnung Hemiptera, z. B.

Nephotettix cincticeps,
Nilaparvata lugens,
Pseudococcus comstocki,
Unaspis yanonensis,
Myzus persicae,
Aphis pomi,
Aphis gossypii,
Rhopalosiphum pseudobrassicae,
Stephanitis nashi,
Nazara spp.,
Cimex lectularius,
Trialeurodes vaporariorum und
Psylla spp. ;

Insekten der Ordnung Orthoptera, z. B.

Blatella germanica,
Periplaneta americana,
.Gryllotalpa africana und
Locusta migratoria migratoriodes ;

Insekten der Ordnung Isoptera, z. B.

Deucotermes speratus und
Coptotermes formosanus ;

Insekten der Ordnung Diptera, z. B.

Musca domestica,
Aedes aegypti,
Hylemia platura
Culex pipiens,
Anopheles sinensis und
Culex tritaeniorhynchus.

Milben können beispielsweise

Tetranychus telarius,
Tetranychus ulticae,
Panonychus citri,
Aculus pelekassi und
Torronomus spp.

umfassen.

Nematoden können beispielsweise

Meloidogyne incognita,
Bursaphelenchus lignicolus Mamiya et Kiyohara,
Aphelenchoides besseyi,
Heterodera glycines und
Pratylenchus spp.

umfassen.

Weiterhin können auf dem Gebiet der bäuerlichen Tierhaltung und Tierzucht die neuen Verbindungen gemäß der vorliegenden Erfindung wirksam gegen verschiedene schädliche Tierparasiten, beispielsweise Zecken, Insekten und Würmer, eingesetzt werden. Beispiele für derartige Tierparasiten können die folgenden Schadinsekten umfassen.

Zecken, wie beispielsweise

Oranithodoros spp.,
Ixodes spp. und
Boophilus spp..

Insekten, wie beispielsweise

Gastrophilus spp.,
Stomoxys spp.,
Trichodectes spp.,
Rhodnius spp. und
Ctenocephalides canis.

Die aktiven Verbindungen können in gebräuchliche Formulierungen überführt werden, etwa Lösungen, Emulsionen, Suspensionen, Pulver, Schäume, Pasten, Granulat, Aerosol, mit der aktiven Verbindung imprägnierte natürliche oder synthetische Stoffe, sehr feine Kapseln in polymeren Substanzen, Überzugsmassen zur Verwendung auf Saatgut (Beizmittel) sowie Formulierungen für den Einsatz mit Verbrennungseinrichtungen wie Räucherpatronen, Räucherdosen und Räucherschlangen sowie für die kalte Vernebelung und die warme Vernebelung nach dem Ultra-Low-Volume-Verfahren.

Diese Formulierungen können in bekannter Weise hergestellt werden, beispielsweise durch Vermischen der aktiven Verbindungen mit Streckmitteln, das heißt mit flüssigen oder verflüssigten gasförmigen oder festen Verdünnungsmitteln oder Trägern, gegebenenfalls unter Verwendung grenzflächenaktiver Mittel, das heißt von Emulgatoren und/oder Dispergiermitteln und/oder schaumbildenden Mitteln. Bei Verwendung von Wasser als Streckmittel können organische Lösungsmittel beispielsweise als Hilfslösungsmittel verwendet werden.

Als flüssige Lösungsmittel, Verdünnungsmittel oder Träger hauptsächlich geeignet sind aromatische Kohlenwasserstoffe wie Xylol, Toluol oder Alkylnaphthaline, chlorierte aromatische oder chlorierte aliphatische Kohlenwasserstoffe wie Chlorbenzole, Chloroethylene oder Methylenchlorid, aliphatische Kohlenwasserstoffe wie Cyclohexan oder Paraffine, beispielsweise Mineralöl-Fraktionen, Alkohole wie Butanol oder Glycol sowie deren Ether und Ester, Ketone wie Aceton, Methylethylketon, Methylisobutylketon oder Cyclohexanon oder stark polare Lösungsmittel wie Dimethylformamid und Dimethylsulfoxid sowie auch Wasser.

Unter verflüssigten gasförmigen Verdünnungsmitteln oder Trägern sind Flüssigkeiten zu verstehen, die bei normaller Temperatur und normalem Druck gasförmig wären, beispielsweise Aerosol-Treibmittel wie halogenierte Kohlenwasserstoffe sowie Butan, Propan, Stickstoff und Kohlenstoffdioxid.

Als feste Träger verwendbar sind gemahlene natürliche Minerale wie Kaoline, Tone, Talkum, Kreide, Quarz, Attapulgit, Montmorillonit oder Diatomeenerde und gemahlene synthetische Minerale wie hochdisperse Kieselsäure, Aluminiumoxid und Silicate. Als feste Träger für Granulat können zerkleinerte und fraktionierte Natursteinmaterialien verwendet werden, etwa Calcit, Marmor, Bimsstein, Sepiolith und Dolomit sowie synthetisches Granulat aus anorganischen und organischen Mehlen und Granulat aus organischem Material wie Sägemehl, Kokosnußschalen, Maiskolben und Tabakstengel.

Als emulgierende und/oder schaumbildende Mittel können nicht-ionische und anionische Emulgatoren wie Polyoxyethylenfettsäureester, Polyoxyethylenfettalkoholether, beispielsweise Alkylarylpolyglycol-Ether, Alkylsulfonate, Alkylsulfate, Arylsulfonate sowie Albumin-Hydrolyseprodukte verwendet werden. Zu Dispergiermitteln zählen beispielsweise Ligninsulfit-Ablaugen und Methylcellulose.

Haftmittel wie Carboxymethylcellulose und natürliche und synthetische Polymere in Form von Pulvern, Granulat oder Latices wie Gummi arabicum, Polyvinylalkohol und Polyvinylacetat können bei der Formulierung verwendet werden.

Es ist möglich, farbgebende Mittel, etwa anorganische Pigmente wie beispielsweise Eisenoxid, Titanoxid und Preußisch Blau and organische Farbstoffe wie Alizarin-Farbstoffe, Azo-Farbstoffe oder Metallphthalocyanin-Farbstoffe, sowie Spuren-Nährstoffe wie Salze von Eisen, Mangan, Bor, Kupfer, Cobalt, Molybdän und Zink zu verwenden.

Die Formulierungen enthalten im allgemeinen 0,1 bis 95 Gew.-%, vorzugsweise 0,5 bis 90 Gew.-% der aktiven Verbindung.

Die aktiven Verbindungen gemäß der Erfindung können in ihren handelsüblichen Formulierungen oder den aus diesen Formulierungen hergestellten Anwendungsformen im Gemisch mit anderen aktiven Verbindungen vorliegen, etwa mit Insektiziden, Ködern, Sterilisationsmitteln, Akariziden, Nematiziden, Fungiziden, Wachstumsregulatoren oder Herbiziden. Zu den Insektiziden gehören beispielsweise Phosphate, Carbamate, Carboxylate, chlorierte Kohlenwasserstoffe, Phenylharnstoffe und von Mikroorganismen erzeugte Substanzen.

Die aktiven Verbindungen gemäß der vorliegenden Erfindung können weiterhin in ihren handelsüblichen Formulierungen oder den aus diesen Formulierungen hergestellten Anwendungsformen im Gemisch mit synergistischen Mitteln vorliegen. Synergistische Mittel sind Verbindungen, die die Wirkung der aktiven Verbindungen steigern, ohne daß es für das zugesetzte synergistische Mittel erforderlich ist, selbst aktiv zu sein.

Der Gehalt der aktiven Verbindung in den aus den im Handel erhältlichen Formulierungen hergestellten Anwendungsformen kann innerhalb weiter Grenzen variieren. Die Konzentration der aktiven Verbindung in den Anwendungsformen kann 0,0000001 bis 100 Gew.-% betragen und liegt vorzugsweise zwischen 0,0001 und 1 Gew.-%.

Die Verbindungen werden in üblicher Weise in einer den Anwendungsformen angemessenen Form zur Anwendung gebracht.

Bei der Verwendung gegen Hygiene-Schädlinge und Schädlinge in Produkt-Vorräten zeichnen sich die aktiven Verbindungen durch eine hervorragende Rückstandswirkung auf Holz und Ton sowie eine gute Beständigkeit gegen Alkali auf gekalkten Unterlagen aus.

Die folgenden Beispiele erläutern die vorliegende Erfindung im einzelnen. Die vorliegende Erfindung ist jedoch nicht auf diese Beispiele beschränkt.

## Herstellungsbeispiele

### Beispiel 1

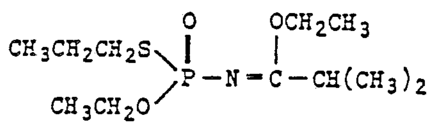

(Verbindung Nr.1)

O-Ethyl-S-n-propylphosphorochloridothioat (8,10 g) wird in Toluol (40 ml) gelöst, und Ethylisobutyroimidat (10, 12 g) wurde tropfenweise bei 0 °C zu der Lösung hinzugegeben. Nachdem 16 h bei Raumtemperatur und weiter 4 h bei 60 °C gerührt worden war, wurde die Toluol-Lösung nacheinander mit Wasser, einer 2-proz. wäßrigen Salzsäure-Lösung, einer 5-proz. wäßrigen Kaliumhydroxid-Lösung und Wasser gewaschen und dann über wasserfreiem Natriumsulfat getrocknet. Nach dem Abdestillieren des Lösungsmitels unter vermindertem Druck wurden 9,61 g ölige Rohprodukte erhalten. Die Rohprodukte wurden durch Destillation unter vermindertem Druck gereinigt, wonach N-(O-Ethyl-S-n-propylthiophosphoryl)isobutyroimidat (5,73 g) erhalten wurde ; $n_D^{20} = 1{,}4745$.

Die Verbindungen, die gemäß der gleichen Methode wie in Beispiel 1 erhalten wurden, sind in der folgenden Tabelle 1 aufgeführt.

Tabelle 1

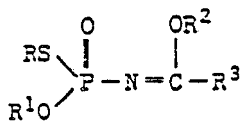

| Verbindung Nr. | R | $R^1$ | $R^2$ | $R^3$ | |
|---|---|---|---|---|---|
| 2 | $n-C_3H_7$ | $-C_2H_5$ | $-C_2H_5$ | $n-C_3H_7$ | $n_D^{20}$ 1.4766 |
| 3 | $sec-C_4H_9$ | $-C_2H_5$ | $-C_2H_5$ | $n-C_3H_7$ | $n_D^{20}$ 1.4762 |
| 4 | $n-C_3H_7$ | $-C_2H_5$ | $-CH_3$ | $iso-C_3H_7$ | $n_D^{20}$ 1.4252 |
| 5 | $sec-C_4H_9$ | $-C_2H_5$ | $-CH_3$ | $iso-C_3H_7$ | $n_D^{20}$ 1.4230 |
| 6 | $sec-C_4H_9$ | $-C_2H_5$ | $-C_2H_5$ | $iso-C_3H_7$ | $n_D^{20}$ 1.4740 |
| 7 | $n-C_3H_7$ | $-C_2H_5$ | $-C_2H_5$ | $n-C_4H_9$ | $n_D^{20}$ 1.4752 |
| 8 | $sec-C_4H_9$ | $-C_2H_5$ | $-C_2H_5$ | $n-C_4H_9$ | $n_D^{20}$ 1.4745 |
| 9 | $n-C_3H_7$ | $-C_2H_5$ | $-C_2H_5$ | $sec-C_4H_9$ | |
| 10 | $sec-C_4H_9$ | $-C_2H_5$ | $-C_2H_5$ | $sec-C_4H_9$ | |
| 11 | $n-C_3H_7$ | $-C_2H_5$ | $-C_2H_5$ | $iso-C_4H_9$ | |
| 12 | $sec-C_4H_9$ | $-C_2H_5$ | $-C_2H_5$ | $iso-C_4H_9$ | |
| 13 | $n-C_3H_7$ | $-C_2H_5$ | $-C_2H_5$ | $tert-C_4H_9$ | |

## Verwendungsbeispiele

Vergleich :

A – 1 :

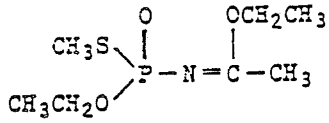

A – 2 :

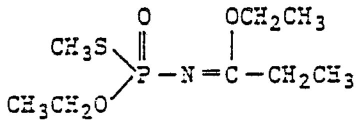

A – 3 :

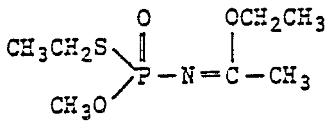

A – 4 :

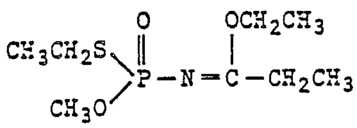

Die Verbindungen A-1, A-2, A-3 und A-4 sind Verbindungen, die in der JP-OS 67 437/1973 oder der DE-A-22 60 576 beschrieben sind.

## Beispiel 2

Test mit gegen Organophosphor-Mittel resistenten Nephotettix cincticeps

Herstellung einer Lösung der Test-Chemikalie :

| | |
|---|---|
| Lösungsmittel | Xylol 3 Gew.-Teile |
| Emulgator | Polyoxyethylenalkylphenylether 1 Gew.-Teil |

Zur Herstellung einer Formulierung einer geeigneten aktiven Verbindung wurde 1 Gew.-Teil der aktiven Verbindung mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren :

Eine Lösung der aktiven Verbindung, die wie oben beschrieben angesetzt und mit Wasser auf eine vorher festgelegte Konzentration verdünnt worden war, wurde auf Oryza sativa von etwa 10 cm Höhe, die jeweils in Töpfe von 12 cm Durchmesser gepflanzt waren, in einer Menge von 10 ml pro Topf verstreut. Nach dem Trocknen der aufgesprühten Chemikalien-Lösung wurde über die Pflanzen ein Drahtkorb von 7 cm Durchmesser und 14 cm Höhe gestülpt, unter dem 30 ausgewachsene weibliche Exemplare von Nephotettix cincticeps, die gegen Organophosphor-Insektizide Resistenz zeigten, ausgesetzt wurden. Die Töpfe wurden jeweils in einem thermostatisierten Raum aufbewahrt, und nach 2 Tagen wurde die Zahl der toten Insekten bestimmt und daraus die Insektizid-Rate berechnet.

Die Ergebnisse sind anhand typischer Beispiele in Tabelle 2 aufgeführt.

(Siehe Tabelle 2 Seite 9 f.)

Tabelle 2

| Verbindung Nr. | Insektizid-Rate (%) Wirkstoff-Konzentration (ppm) 1000 | 200 | 40 | 8 | 1,6 |
|---|---|---|---|---|---|
| 1 | 100 | 100 | 100 | 100 | 100 |
| 2 | 100 | 100 | 100 | 100 | |
| 3 | 100 | 100 | 100 | | |
| 4 | 100 | 100 | 100 | | |
| Vergleichs-Verbindung | | | | | |
| A-1 | 100 | 60 | 0 | | |
| A-2 | 90 | 0 | | | |
| A-3 | 100 | 0 | | | |
| A-4 | 100 | 20 | 0 | | |

Beispiel 3

Test gegen Tetranychus telarius (Sprühtest) :

Test-Verfahren :

50 bis 100 ausgewachsene Exemplare von Tetranychus telarius, die gegen Organophosphor-Mittel resistent waren, wurden auf den Blättern von Phaseolus vulgaris im 2-Blatt-Stadium ausgesetzt, die in Töpfen mit einem Durchmesser von 6 cm gezogen worden waren. 2 Tage nach der Inokulierung wurde eine wie in Beispiel 2 hergestellte wäßrige Verdünnung der aktiven Verbindung mit festgelegter Konzentration in einer Menge von 40 ml je Topf gesprüht. Die Töpfe wurden in einem Gewächshaus gehalten. Nach 10 Tagen wurde die Bekämpfungswirkung bewertet und durch den Index bezeichnet. Der Index ist wie folgt definiert :

3 : Anteil der überlebenden ausgewachsenen Insekten : 0 % ;
2 : Anteil der überlebenden ausgewachsenen Insekten : 0 % bis 5 %, der nicht behandelten Fälle ;
1 : Anteil der überlebenden ausgewachsenen Insekten : 5 % bis 50 %, der nicht behandelten Fälle ;
0 : Anteil der überlebenden ausgewachsenen Insekten : mehr als 50 %, der nicht behandelten Fälle.

Die Ergebnisse sind anhand typischer Beispiele in der Tabelle 3 aufgeführt.

(Siehe Tabelle 3 Seite 10 f.)

Tabelle 3

| Verbindung Nr. | Insektizid-Rate (%) Wirkstoff-Konzentration (ppm) | | | |
|---|---|---|---|---|
| | 1000 | 200 | 40 | 8 |
| 1 | 3 | 3 | 3 | |
| 2 | 3 | 3 | 3 | 3 |
| 3 | 3 | 3 | 3 | |
| Vergleichs-Verbindung | | | | |
| A-1 | 0 | | | |
| A-2 | 0 | | | |
| A-3 | 0 | | | |
| A-4 | 1 | 0 | | |

Beispiel 4

Test gegen Tetranychus telarius (Test auf systemische Aktivität) :

Test-Verfahren ;

50 bis 100 ausgewachsene Exemplare von Tetranychus telarius wurden auf den Blättern von Phaseolus vulgaris im 2-Keimblatt-Stadium ausgesetzt, die in Töpfen mit einem Durchmesser von 9 cm gezogen worden waren. 2 Tage nach der Inokulierung wurde eine wie in Beispiel 2 hergestellte wäßrige Verdünnung der aktiven Verbindung mit festgelegter Konzentration in einer Menge von 20 ml je Topf in der Nähe der Wurzeln durch Bewässern aufgebracht. Die Töpfe wurden in einem Gewächshaus gehalten. Nach 10 Tagen wurde die Bekämpfungswirkung bewertet und durch den Index bezeichnet. Der Index ist wie folgt definiert :

3 : Anteil der überlebenden ausgewachsenen Insekten : 0 % ;
2 : Anteil der überlebenden ausgewachsenen Insekten : 0 % bis 5 %, der nicht behandelten Fälle ;
1 : Anteil der überlebenden ausgewachsenen Insekten : 5 % bis 50 %, der nicht behandelten Fälle ;
0 : Anteil der überlebenden ausgewachsenen Insekten : mehr als 50 %, der nicht behandelten Fälle.

Die Ergebnisse sind anhand typischer Beispiele in der Tabelle 4 aufgeführt.

Tabelle 4

| Verbindung Nr. | Insektizid-Rate (%) Wirkstoff-Konzentration (ppm) | | | |
|---|---|---|---|---|
| | 1000 | 200 | 40 | 8 |
| 1 | 3 | 3 | 3 | 3 |
| 2 | 3 | 3 | 3 | 3 |
| 3 | 3 | 3 | 3 | |
| Vergleichs-Verbindung | | | | |
| A-1 | 1 | 0 | | |
| A-2 | 0 | | | |
| A-3 | 0 | | | |
| A-4 | 0 | | | |

Beispiel 5

Test gegen Meloidogyne incognita :

Herstellung der Lösung der geprüften Chemikalie :

2 Teile einer aktiven Verbindung und 98 Teile Talkum wurden pulverisiert und miteinander vermischt.

Test-Verfahren :

Die wie oben angegeben zubereitete aktive Verbindung wurde in Mengen von 50, 25, 10, 5 und 2,5 ppm auf durch Meloidogyne incognita verseuchte Erde aufgebracht und zur Vermischung mit dieser gleichmäßig verrührt und dann in Töpfe von 2 $dm^2$ gefüllt. In diese wurden etwa 20 Körner Tomaten-Samen (Art : Kurihara) eingesät und im Gewächshaus angezogen. Nach vier Wochen wurden die Wurzeln der Tomatenpflanzen ausgegraben, ohne sie dabei zu verletzen. Der Grad der Schädigung von 10 Wurzeln derselben wurde zur Bestimmung des Wurzelgallen-Index festgestellt und nach dem folgenden Maßstab bewertet :

Grad der Schädigung :

0 : keine Gallen (vollständige Bekämpfung) ;
1 : leichte Gallenbildung ;
3 : merkliche Gallenbildung ;
4 : sehr starke Gallenbildung (entsprechend derjenigen unbehandelter Pflanzen).

$$\text{Wurzelgallen-Index} = \frac{\sum \left(\text{Klassenbewertung} \times \text{Zahl der Individuen}\right)}{\left(\text{Gesamtzahl der bewerteten Individuen}\right) \times 4} \times 100$$

Die Bewertung aufgrund der Bekämpfungswirkung erfolgte mit Hilfe der nachstehenden Gleichung :

$$\text{Bekämpfungswirkung} = \frac{\left(\text{Wurzelgallen-Index der unbehandelt. Gruppe} - \text{Wurzelgallen-Index der behandelt. Gruppe}\right)}{\text{Wurzelgallen-Index der unbehandelten Gruppe}} \times 100$$

Eine Bekämpfungswirkung von 100 % bezeichnet eine vollständige Bekämpfung.
Die so erhaltenen Ergebnisse sind anhand typischer Beispiele in Tabelle 5 aufgeführt.

Tabelle 5

| Verbindung Nr. | Insektizid-Rate (%) Wirkstoff-Konzentration (ppm) | | | | |
|---|---|---|---|---|---|
| | 50 | 25 | 10 | 5 | 2,5 |
| 1 | 100 | 100 | 100 | 100 | 89 |
| 2 | 100 | 100 | 100 | 98 | 70 |
| 3 | 100 | 100 | 100 | 100 | 82 |
| 4 | 100 | 100 | 100 | 100 | 100 |
| Vergleichs-Verbindung | | | | | |
| A-1 | 0 | | | | |
| A-2 | 0 | | | | |
| A-3 | 0 | | | | |
| A-4 | 0 | | | | |

Beispiel 6

Test gegen Hylemia platura :

Test-Verfahren :

Die in gleicher Weise wie in Beispiel 5 zubereiteten aktiven Verbindungen wurden in einer Dosierung der Chemikalie von 50, 25, 10, 5 und 2,5 ppm auf die zu untersuchende Erde aufgebracht und zur Vermischung mit dieser gleichmäßig verrührt und dann in Töpfe von 2 $dm^2$ gefüllt. In diese wurden Samenkörner von Allium cepa (Varietät : Hayate), etwa 100 Körner pro Topf, eingesät und im Gewächshaus angezogen. Zwei Wochen danach wurden etwa 200 Larven des 1. Erscheinungsstadiums von Hylemia platura pro Topf inokuliert, und zwei Wochen nach der Inokulierung wurden Pflänzchen von Allium cepa ausgegraben. Der Grad der Schädigung wurde zur Bestimmung der Bekämpfungswirkung nach dem folgenden Maßstab festgestellt und bewertet :

Grad der Schädigung :
- 0 : keine Schädigung ;
- 1 : leichte Schädigung ;
- 2 : mäßige Schädigung ;
- 3 : starke Schädigung ;
- 4 : Tod.

$$\text{Index der Schädigung} = \frac{\sum \left(\text{Grad der Schädigung} \times \text{Zahl der Individuen}\right)}{\left(\text{Gesamtzahl der bewerteten Individuen}\right) \times 4} \times 100$$

$$\text{Bekämpfungswirkung} = \frac{\left(\text{Schädigungs-Index der unbehandelt. Gruppe} - \text{Schädigungs-Index der behandelt. Gruppe}\right)}{\text{Schädigungs-Index der unbehandelten Gruppe}} \times 100$$

Die so erhaltenen Ergebnisse sind anhand typischer Beispiele in Tabelle 6 aufgeführt.

Tabelle 6

| Verbindung Nr. | Bekämpfungswirkung (%) Wirkstoff-Konzentration (ppm) 50 | 25 | 10 | 5 |
|---|---|---|---|---|
| 1 | 100 | 100 | 100 | 100 |
| 2 | 100 | 100 | 100 | 100 |
| 3 | 100 | 100 | 100 | 100 |
| Vergleichs-Verbindung | | | | |
| A-1 | 80 | 0 | | |
| A-4 | 40 | 0 | | |

**Patentansprüche**

1. Phosphoroimidate der Formel (I)

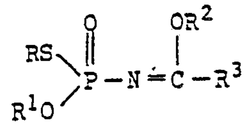 (I)

in der
R n-Propyl oder sec-Butyl bezeichnet,
$R^1$ Methyl oder Ethyl bezeichnet,
$R^2$ Methyl oder Ethyl bezeichnet und
$R^3$ Alkyl mit 3 bis 4 Kohlenstoff-Atomen bezeichnet.

2. Verbindungen nach Anspruch 1, dadurch gekennzeichnet, daß
R n-Propyl oder sec-Butyl ist,
$R^1$ Ethyl ist,
$R^2$ Ethyl ist und
$R^3$ n-Propyl, i-Propyl, n-Butyl, i-Butyl oder sec-Butyl ist.

3. Verbindungen nach Anspruch 1, dadurch gekennzeichnet, daß
R n-Propyl ist,
$R^1$ Ethyl ist,
$R^2$ Ethyl ist und
$R^3$ n-Propyl oder i-Propyl ist.

4. Verbindungen nach Ansprüchen 1 bis 3, ausgewählt aus Ethyl-N-(O-ethyl-S-n-propylthiophosphoryl) isobutyroimidat der Formel

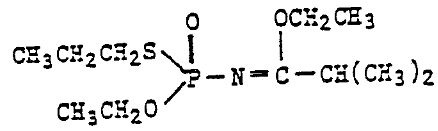

und Ethyl-N-(O-ethyl-S-n-propylthiophosphoryl) butyroimidat der Formel

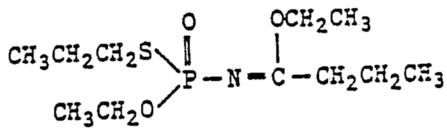

5. Verfahren zur Herstellung von Phosphoroimidaten der Formel (I)

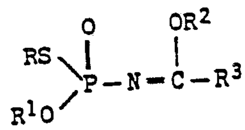 (I)

in der
R n-Propyl oder sec-Butyl bezeichnet,
$R^1$ Methyl oder Ethyl bezeichnet,
$R^2$ Methyl oder Ethyl bezeichnet und
$R^3$ Alkyl mit 3 bis 4 Kohlenstoff-Atomen bezeichnet,
dadurch gekennzeichnet, daß
(a) die Verbindungen der Formel (II)

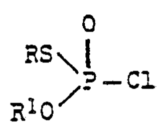 (II)

in der R und $R^1$ die im Vorstehenden angegebenen Bedeutungen haben, mit Verbindungen der Formel (III)

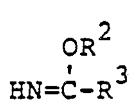 (III)

in der $R^2$ und $R^3$ die im Vorstehenden angegebenen Bedeutungen haben, in Gegenwart inerter Lösungsmittel, gegebenenfalls in Gegenwart von Säure-Acceptoren, umgesetzt werden, oder

(b) die Verbindungen der Formel (IV)

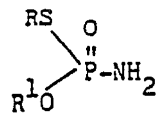

(IV)

in der R und $R^1$ die im Vorstehenden angegebenen Bedeutungen haben, mit Verbindungen der Formel (V)

$$R^3—C(OR^2)_3 \qquad (V),$$

in der $R^2$ und $R^3$ die im Vorstehenden angegebenen Bedeutungen haben, in Gegenwart inerter Lösungsmittel umgesetzt werden.

6. Insektizide, akarizide und nematizide Mittel, dadurch gekennzeichnet, daß sie wenigstens ein Phosphoroimidat der Formel (I) nach Ansprüchen 1 bis 4 enthalten.

7. Verfahren zur Bekämpfung schädlicher Insekten, Milben und Nematoden dadurch gekennzeichnet, daß man Phosphoroimidate der Formel (I) nach Ansprüchen 1 bis 4 auf die schädlichen Insekten, Milben, Nematoden und/oder deren Lebensraum einwirken läßt.

8. Verwendung von Phosphoroimidaten der Formel (I) nach Ansprüchen 1 bis 4 der Formel (I) zur Bekämpfung schädlicher Insekten, Milben und Nematoden.

9. Verfahren zur Herstellung insektizider, akarizider und nematizider Mittel, dadurch gekennzeichnet, daß Phosphoroimidate der Formel (I) nach Ansprüchen 1 bis 4 mit Streckmitteln und/oder grenzflächenaktiven Mitteln vermischt werden.

## Claims

1. Phosphoroimidates of the formula (I)

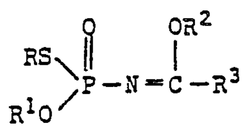

(I)

in which

R signifies n-propyl or sec-butyl,
$R^1$ signifies methyl or ethyl,
$R^2$ signifies methyl or ethyl and
$R^3$ signifies alkyl having 3 to 4 carbon atoms.

2. Compounds according to Claim 1, characterized in that
R is n-propyl or sec-butyl,
$R^1$ is ethyl,
$R^2$ is ethyl and
$R^3$ is n-propyl, i-propyl, n-butyl, i-butyl or sec-butyl.

3. Compounds according to Claim 1, characterized in that
R is n-propyl,
$R^1$ is ethyl,
$R^2$ is ethyl and
$R^3$ is n-propyl or i-propyl.

4. Compounds according to Claims 1 to 3, selected from ethyl N-(O-ethyl-S-n-propylthiophosphoryl) isobutyroimidate of the formula

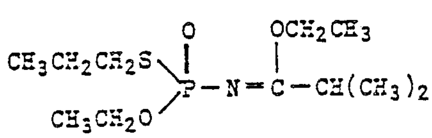

and ethyl N-(O-ethyl-S-n-propylthiophosphoryl) butyroimidate of the formula

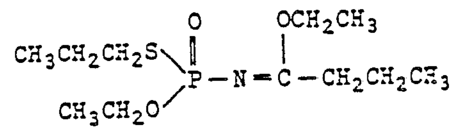

5. Process for the preparation of phosphoroimidates of the formula (I)

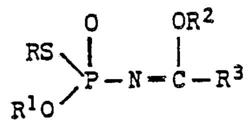 (I)

in which
R signifies n-propyl or sec-butyl,
$R^1$ signifies methyl or ethyl,
$R^2$ signifies methyl or ethyl and
$R^3$ signifies alkyl having 3 to 4 carbon atoms,
characterized in that
(a) the compounds of the formula (II)

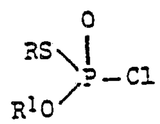 (II)

in which R and $R^1$ have the meanings given in the foregoing, are reacted with compounds of the formula (III)

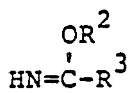 (III)

in which $R^2$ and $R^3$ have the meanings given in the foregoing, in the presence of inert solvents, if appropriate in the presence of acid acceptors, or
(b) the compounds of the formula (IV)

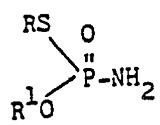 (IV)

in which R and $R^1$ have the meanings given in the foregoing, are reacted with compounds of the formula (V)

$$R^3{-}C(OR^2)_3 \qquad (V)$$

in which $R^2$ and $R^3$ have the meanings given in the foregoing, in the presence of inert solvents.

6. Insecticidal, acaricidal and nematicidal agents, characterized in that they contain at least one phosphoroimidate of the formula (I) according to Claims 1 to 4.

7. Method for combating harmful insects, mites and nematodes, characterized in that phosphoroimidates of the formula (I) according to Claims 1 to 4 are allowed to act on the harmful insects, mites, nematodes and/or their environment.

8. Use of phosphoroimidates of the formula (I) according to Claims 1 to 4 of the formula (I) for combating harmful insects, mites and nematodes.

9. Process for the preparation of insecticidal, acaricidal and nematicidal agents, characterized in that phosphoroimidates of the formula (I) according to Claims 1 to 4 are mixed with extenders and/or surface-active agents.

**Revendications**

1. Phosphoroimidates de formule (I)

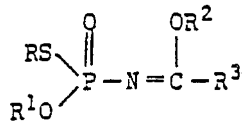

(I)

dans laquelle

R représente un n-propyle ou un sec-butyle,

$R^1$ un méthyle ou un éthyle,

$R^2$ un méthyle ou un éthyle et

$R^3$ un alcoyle ayant 3 à 4 atomes de carbone.

2. Composés selon la revendication 1, caractérisés en ce que

R est un n-propyle ou un sec-butyle,

$R^1$ un éthyle,

$R^2$ un éthyle et

$R^3$ un n-propyle, i-propyle, n-butyle, i-butyle ou sec-butyle.

3. Composés selon la revendication 1, caractérisés en ce que

R est un n-propyle

$R^1$ un éthyle,

$R^2$ un éthyle et

$R^3$ un n-propyle ou i-propyle.

4. Composés selon les revendications 1 à 3, choisis parmi le N-(O-éthyl-S-n-propylthiophosphoryl) isobutyroimidate d'éthyle de formule :

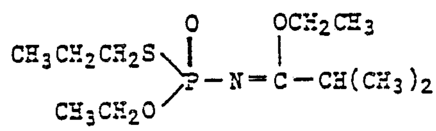

et le N-(O-éthyl-S-n-propylthiophosphoryl) butyroimidate d'éthyle de formule :

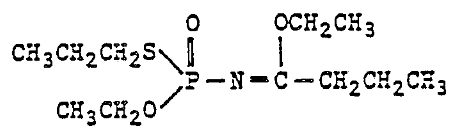

5. Procédé de préparation de phosphoroimidates de formule (I)

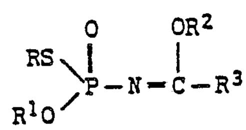

(I)

dans laquelle

R représente un n-propyle ou un sec-butyle,

$R^1$ un méthyle ou éthyle,

$R^2$ un méthyle ou éthyle et

$R^3$ un alcoyle ayant 3 à 4 atomes de carbone,

caractérisé en ce que

(a) on fait réagir les composés de formule (II)

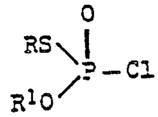

(II)

dans laquelle R et $R^1$ ont les significations indiquées plus haut, avec des composés de formule (III)

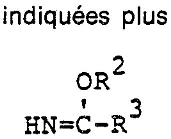

(III)

dans laquelle $R^2$ et $R^3$ ont les significations indiquées plus haut, en présence de solvants inertes, éventuellement en présence d'accepteurs d'acides, ou bien

(b) on fait réagir les composés de formule (IV)

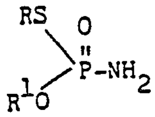

(IV)

dans laquelle R et $R^1$ ont les significations indiquées plus haut, avec des composés de formule (V)

$$R^3{-}C(OR^2)_3 \qquad (V)$$

dans laquelle $R^2$ et $R^3$ ont les significations indiquées plus haut, en présence de solvants inertes.

6. Agents insecticides, acaricides et nématocides, caractérisés en ce qu'ils contiennent au moins un phosphoroimidate de formule (I) selon les revendications 1 à 4.

7. Procédé pour combattre les insecticides, acariens et nématodes nuisibles, caractérisé en ce qu'on fait agir des phosphoroimidates de formule (I) selon les revendications 1 à 4 sur les insectes, acariens, nématodes nuisibles et/ou sur leur espace vital.

8. Utilisation des phosphoroimidates de formule (I) selon les revendications 1 à 4 pour combattre les insectes, acariens et nématodes nuisibles.

9. Procédé de fabrication d'agents insecticides, acaricides et nématocides, caractérisé en ce qu'on mélange des phosphoroimidates de formule (I) selon les revendications 1 à 4 avec des diluants et/ou des agents tensioactifs.